# EUROPÄISCHE PATENTSCHRIFT

(11) **EP 0 738 584 B1**
(45) Veröffentlichungstag und Bekanntmachung des Hinweises auf die Patenterteilung: **28.05.1997**
(21) Anmeldenummer: 96104588.7
(22) Anmeldetag: 22.03.1996
(51) Int. Cl.: B29C 67/00

(54) **Vorrichtung und Verfahren zum Herstellen eines dreidimensionalen Objektes**
Apparatus and method to produce a three-dimensional object
Dispositif et procédé pour la fabrication d'un objet tridimensionnel

(30) Priorität: 21.04.1995 DE 19514740
(43) Veröffentlichungstag der Anmeldung: 23.10.1996
(73) Patentinhaber: EOS GmbH ELECTRO OPTICAL SYSTEMS, 82152 Planegg (DE)
(72) Erfinder: Mattes, Thomas, 82229 Hechendorf (DE); Lohner, Andreas, 85540 Haar (DE); Wilkening, Christian, 86911 Diessen/Ammersee (DE)
(74) Vertreter: Prüfer, Lutz H., Dipl.-Phys.

(56) Entgegenhaltungen:
- EP-A- 0 361 847
- EP-A- 0 450 762
- WO-A-90/03893
- WO-A-94/26446
- DE-U- 9 319 561
- DE-U- 9 400 372
- US-A- 5 238 614

## Beschreibung

Die Erfindung betrifft eine Vorrichtung zum Herstellen eines dreidimensionalen Objektes nach dem Oberbegriff des Patentanspruches 1 bzw. ein Verfahren nach dem Oberbegriff des Patentanspruches 16 bzw. 19.

Ein unter dem Namen "Selektives Lasersintern" bekanntes Verfahren zum Herstellen eines dreidimensionalen Objektes und eine Vorrichtung zur Durchführung des Verfahrens sind in der WO88/02677 beschrieben. Bei dem Verfahren wird ein dreidimensionales Objekt durch aufeinanderfolgendes Verfestigen bzw. Sintern von Schichten eines pulverförmigen, mittels elektromagnetischer Strahlung verfestigbaren Aufbaumaterials an den dem jeweiligen Querschnitt des Objektes entsprechenden Stellen hergestellt. Bei der bekannten Vorrichtung ist eine rotierende Walze zum Verteilen und Glätten des Pulvermaterials zum Bilden einer zu verfestigenden Schicht vorgesehen. Das Verfahren nach dem Oberbegriff des Patentanspruches 19 ist aus der WO88/02677 bekannt.

Aus der DE 94 00 372 U1 ist eine Vorrichtung nach dem Oberbegriff des Patentanspruches 1 bekannt.

Aus der DE-C-43 00 478 ist eine Vorrichtung und ein Verfahren zum Herstellen eines dreidimensionalen Objektes durch Lasersintern bekannt, bei der das Pulver mittels eines Beschichters aufgetragen und geglättet wird.

Bei dem bekannten Verfahren tritt jedoch das Problem auf, daß sich beim Sintern von Metallpulvern mittels eines Laserstrahles aufgrund der hohen Oberflächenspannung des Pulvers eine unregelmäßige, d.h. rauhe Oberfläche bildet. Dabei können gesinterte Pulverpartikel so weit über die gerade mit dem Laserstrahl belichtete Schicht hinausragen, daß ein problemloses Auftragen der nächsten Schicht nicht mehr möglich ist, da der zum Auftragen für die Schicht verwendete Abstreifer an diesen Partikeln hängen bleiben oder sie abreißen kann. Bei filigranen Strukturen kann dies zu einem Abreißen des gesamten Teils führen. Ferner wird durch solche herausstehenden Partikel auch die Oberflächenqualität der jeweiligen Schicht erheblich gemindert.

Aus der EP-A-0 361 847 ist ein Verfahren und eine Vorrichtung zum Herstellen eines dreidimensionalen Objektes durch aufeinanderfolgendes Verfestigen von Schichten eines flüssigen, mittels elektromagnetischer Strahlung polymerisierbaren Materials bekannt. Zum Glätten einer zu verfestigenden Schicht des Materials wird hier ein starres Abstreifmesser verwendet. Das Abstreifmesser weist an seiner Unterseite abgeschrägte Kanten mit einem Winkel zwischen 5 und 8 Grad bezüglich der Flüssigkeitsoberfläche auf. Durch die Abschrägung sollen Turbulenzen und Blasenbildung in der Flüssigkeit unterhalb des Messers beim Glätten der Schicht verhindert werden.

Es ist Aufgabe der Erfindung, eine Vorrichtung bzw. ein Verfahren zum Herstellen eines dreidimensionalen Objektes mittels Lasersintern herzustellen, bei der bzw. bei dem die Oberflächenqualität einer bereits verfestigten Schicht bzw. des Objektes verbessert wird und ein problemloses Auftragen der nächsten Schicht möglich ist.

Die Aufgabe wird gelöst durch eine Vorrichtung nach Patentanspruch 1 bzw. durch ein Verfahren nach Patentanspruch 16 oder 19.

Weitere Merkmale und Zweckmäßigkeiten der Erfindung ergeben sich aus der Beschreibung von Ausführungsbeispielen anhand der Figuren.

Von den Figuren zeigen:
- Fig. 1: eine schematische Querschnittsansicht der Vorrichtung;
- Fig. 2: eine Querschnittsansicht einer Ausführungsform des Beschichters;
- Fig. 3: eine Querschnittsansicht einer weiteren Ausführungsform des Beschichters;
- Fig. 4a-4e: eine schematische Ansicht der Verfahrensschritte mit einer vergrößerten Ansicht der Schichtoberfläche; und
- Fig. 5a-5e: eine weitere schematische Ansicht der Verfahrensschritte.

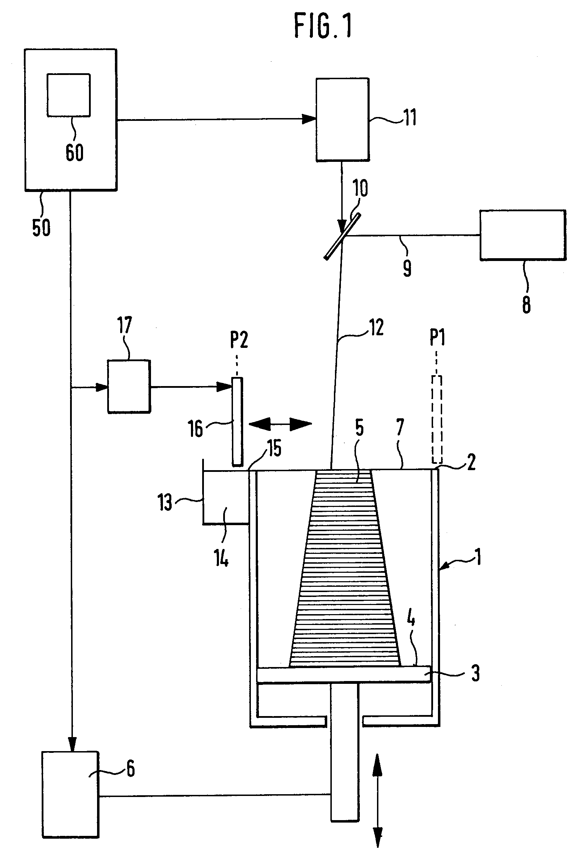

Wie insbesondere aus Fig. 1 ersichtlich ist, weist die Vorrichtung zum Herstellen eines dreidimensionalen Objektes mittels Lasersintern einen an seiner Oberseite offenen Behälter 1 mit einer Oberkante 2 auf. In dem Behälter ist ein Träger 3 mit einer im wesentlichen ebenen und parallel zu der Oberkante 2 ausgerichteten Oberseite 4 zum Tragen eines zu bildenden Objektes 5 angeordnet. Auf der Oberseite des Trägers 3 befindet sich das Objekt 5, das aus einer Mehrzahl von Schichten eines mittels elektromagnetischer Strahlung verfestigbaren, pulverförmigen Aufbaumateriales 14, die sich jeweils parallel zur Oberseite 4 des Trägers erstrecken, in der später beschriebenen Weise aufgebaut wird. Der Träger 3 ist über eine Höheneinstellvorrichtung 6 in vertikaler Richtung, d.h. parallel zu den Behälterwänden und senkrecht zur Oberseite 4 des Trägers verschiebbar. Damit kann die Position des Trägers 3 relativ zu der Oberkante 2 des Behälters eingestellt werden. Durch die Oberkante 2 des Behälters ist eine Arbeitsebene 7 definiert.

Oberhalb des Behälters 1 bzw. der Arbeitsebene 7 ist eine Vorrichtung 8 zum Verfestigen der an die Arbeitsebene 7 angrenzenden obersten Schicht des zu bildenden Objektes vorgesehen. Die Vorrichtung weist eine Strahlungsquelle in Form eines Lasers auf, der einen gebündelten Lichtstrahl 9 erzeugt. Etwa mittig oberhalb des Behälters 1 ist ein Umlenkspiegel 10 angeordnet, der kardanisch aufgehängt ist und von einer schematisch angedeuteten Schwenkvorrichtung 11 so geschwenkt werden kann, daß der auf den Spiegel 10 gerichtete Lichtstrahl 9 vom Spiegel 10 als reflektierter Lichtstrahl 12 an im wesentlichen jeder Stelle der Arbeitsebene 7 positioniert werden kann.

Seitlich an dem Behälter 1 ist ein an seiner Oberseite offener Vorratsbehälter 13 für das Aufbaumaterial 14 angebracht. An seiner an die Behälterwand angrenzenden Seite schließt der Vorratsbehälter mit seiner Oberkante 15 bündig mit der Oberkante 2 des Behälters ab. Der Vorratsbehälter ist mit dem pulverförmigen Aufbaumaterial 14, welches insbesondere aus Metallpulver besteht, stets etwas über seine an die Behälterwand angrenzenden Oberkante 15 hinaus gefüllt. Hierzu weist der Vorratsbehälter 13 einen in Fig. 1 nicht dargestellten, in vertikaler Richtung verschiebbaren Boden auf, der jeweils nach der Entnahme von Pulver zum Beschichten um ein Stück nach oben gefahren werden kann, so daß die Füllhöhe des Pulvers wieder über der Oberkante 15 liegt.

Oberhalb des Behälters 1 ist eine in Figur 1 schematisch angedeutete Auftragevorrichtung, die einen Beschichter 16 umfaßt, angeordnet, der sich im wesentlichen quer über den offenen Bereich des Behälters 1 erstreckt. Die Unterkante des Beschichters 16 liegt in der Arbeitsebene 7. Es ist eine Verschiebevorrichtung 17 zum Verschieben des Beschichters 16 in einer Ebene parallel zur Arbeitsebene 7 bzw. parallel zu der Oberseite 4 des Trägers 3 vorgesehen. Die Verschiebevorrichtung 17 ist so ausgebildet, daß sie eine Verschiebung des Beschichters 15 von einer Position P1 auf der dem Vorratsbehälter gegenüberliegenden Seite des Behälters 1 in eine Position P2 über dem Vorratsbehälter und wieder zurück mit einer einstellbaren, variablen Geschwindigkeit erlaubt.

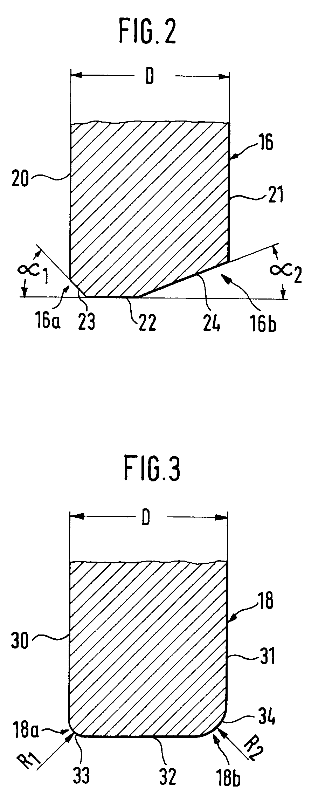

Eine in Fig. 2 gezeigte erste Ausführungsform des Beschichters 16 weist eine erste Seitenfläche 20 und parallel dazu eine zweite Seitenfläche 21 auf, welche sich im wesentlichen senkrecht zur Oberseite 4 des Trägers 3 erstrecken, und eine Grundfläche 22 auf, welche sich parallel zu der Oberseite 4 des Trägers 3 erstreckt und in der Arbeitsebene 7 liegt. Die erste Seitenfläche 20 und die zweite Seitenfläche 21 weisen voneinander einen Abstand D von ungefähr 10mm auf. Die erste Seitenfläche 20 und die Grundfläche 22 definieren zwischen sich einen ersten Randabschnitt 16a, welcher durch eine schräg zu diesen Flächen verlaufende ebene Fläche 23 gebildet ist. Die Fläche 23 schließt mit der Ebene, in der die Grundfläche 22 liegt, einen Winkel α₁ von vorzugsweise etwa 60° ein. Die zweite Seitenfläche 21 und die Grundfläche 22 definieren zwischen sich einen zweiten Randabschnitt 16b, der durch eine ebene Fläche 24 gebildet wird, welche mit der Ebene, in der die Grundfläche 22 liegt, einen Winkel α₂ von vorzugsweise 30° einschließt. Damit weist der Beschichter 16 in einer Ebene, senkrecht zur Arbeitsebene 7 und parallel zu seiner Verschieberichtung einen asymmetrischen Querschnitt auf, wobei durch den ersten Randabschnitt 16a eine definierte Beschichtungskante mit einer Fase mit einem Winkel α₁ und durch den zweiten Randabschnitt 16b eine Glättkante mit einer zweiten Fase mit einem Winkel α₂ gebildet sind. Dabei ist der Winkel α₁ größer als der Winkel α₂.

In der in Fig. 3 gezeigten Ausführungsform weist der Beschichter 18 ebenfalls eine erste Seitenfläche 30 und eine zweite Seitenfläche 31 auf, die im wesentlichen parallel zueinander sind und sich senkrecht zu der Verschieberichtung des Beschichters 18 erstrecken und ferner eine Grundfläche 32, welche sich parallel zu der Oberseite 4 des Trägers erstreckt und in der Arbeitsebene 7 liegt. Bei dieser Ausführungsform weist der sich zwischen der ersten Seitenfläche 30 und der Grundfläche 32 erstreckende erste Randabschnitt 18a eine gekrümmte Fläche 33 mit einem Krümmungsradius R₁ von vorzugsweise etwa 3mm auf. Der durch die zweite Seitenfläche 31 und die Grundfläche 32 gebildete Randabschnitt 18b weist eine gekrümmte Fläche 34 mit einem Krümmungsradius R₂ von vorzugsweise etwa 10mm auf. Damit ist durch die erste gekrümmte Fläche 33 eine definierte Beschichtungskante zum Auftragen des Materials und durch die gekrümmte Fläche 34 eine Glättkante zum Glätten und Verdichten des verfestigten Materials auf einer Schicht definiert.

Der Beschichter 16, 18, ist aus einem starren Material, insbesondere aus Metall oder aus einem hitzebeständigen Kunststoff gebildet.

Der Beschichter 16 bzw. 18 ist in der Vorrichtung von Fig. 1 so angeordnet, daß der erste Randabschnitt 16a, 18a auf das dem Vorratsbehälter 13 gegenüberliegende Ende des Behälters 1 weist und der zweite Randabschnitt 16b, 18b dem Vorratsbehälter 13 zugewandt ist.

Die Verschiebevorrichtung 17, die Höheneinstellvorrichtung 6 und die Schwenkvorrichtung 11 sind mit einer zentralen Steuervorrichtung 50 zur zentralen und koordinierten Steuerung dieser Vorrichtungen verbunden. Die Steuerung 50 weist ferner einen Computer 60 auf.

Die Steuerung 50 ist so ausgebildet, daß sie die Verschiebevorrichtung 17 so steuert, daß der Beschichter 16 von der Position P2 oberhalb des Vorratsbehälters 13 in Richtung seines ersten Randabschnittes 16a über den Träger 3 bzw. eine zuvor verfestigte Schicht zum Auftragen einer neuen Materialschicht bis an das dem Vorratsbehälter 13 gegenüberliegende Ende des Behälters in die Position P1 bewegt wird. Ferner ist die Steuerung 50 so ausgebildet, daß nach dem Verfestigen einer Schicht des Objektes 5 der Beschichter 16 wieder von der Position P1 in die Position P2 bewegt wird, so daß er mit seinem zweiten Randabschnitt 16b über die bereits verfestigte Schicht streicht.

Abwandlungen der beschriebenen Vorrichtung sind möglich. Für den Winkel α₁ sind Werte zwischen etwa 30° und etwa 90° möglich. Für den Winkel α₂ sind Werte zwischen etwa 1° und etwa 60° möglich. Ein bevorzugter Bereich für α₁ ist der Bereich zwischen 60° und 70°, und für α₂ der Bereich zwischen 20° und 30°. Für den Krümmungsradius R₁ können Werte zwischen nahezu 0mm und etwa 3mm gewählt werden, für den Krümmungsradius R₂ können Werte zwischen etwa 1mm und 10mm gewählt werden. Ein bevorzugter Bereich für R₁ ist der Bereich zwischen 1mm und 3mm, für R2 zwischen 5mm und 10mm.

Auch Kombinationen zwischen einer abgerundeten Fläche für den ersten Randabschnitt und einer abgeschrägten Fläche für den zweiten Randabschnitt bzw. umgekehrt sind möglich. Wesentlich ist, daß der als Beschichtungskante definierte erste Randabschnitt eine größere Steigung zur Grundfläche aufweist als der für die Glättung und Verdichtung einer bereits verfestigten Schicht vorgesehene zweite Randabschnitt.

Die Vorrichtung zum Verfestigen muß nicht notwendigerweise ein Laser sein, auch jede andere Quelle für elektromagnetische Strahlung bzw. eine Quelle für Teilchenstrahlung, mit der zur Sinterung des Pulvers entsprechenden Energie ist denkbar.

Das Verfahren zum Herstellen des dreidimensionalen Objektes mittels Lasersintern weist die folgenden Schritte auf.

Im Betrieb der Vorrichtung werden zunächst in dem mit der Steuerung 50 gekoppelten Computer 60 aufgrund eines Konstruktionsprogramms oder dergleichen Daten über die Form des Objektes 5 erstellt bzw. abgespeichert. Diese Daten werden für die Herstellung des Objektes 5 so aufbereitet, daß das Objekt in eine Vielzahl von horizontalen, im Vergleich zur Objektdimension dünnen Schichten mit einer Dicke von Beispielsweise 0,1 bis 1mm zerlegt wird, und die Formdaten für jede Schicht bereitgestellt werden.

In einem ersten Schritt wird der Träger 3 derart in dem Behälter 1 verfahren, daß seine Oberseite 4 um eine Höhe h, die der gewünschten Schichtdicke entspricht, unterhalb der Oberkante 2 des Behälters liegt. Der Beschichter befindet sich hierbei in seiner Startposition P1 an der dem Vorratsbehälter gegenüberliegenden Seite, von der aus er in die Position P2 über dem Vorratsbehälter gefahren wird. Dann wird eine erste Schicht des Materials 14 mit dem Beschichter 16 auf die Oberseite 4 des Trägers aufgebracht. Dabei schiebt der Beschichter 16 von der Position P2 das Material 14 aus dem Vorratsbehälter 13 mit seinem ersten Randabschnitt 16a in den zwischen der Oberseite 4 des Trägers 3 und der Oberkante 2 des Behälters befindlichen Raum. Nach Abschluß dieses ersten Beschichtungsvorganges befindet sich der Beschichter in der Position P1 gegenüber dem Vorratsbehälter. Dann steuert die Steuerung 50 die Schwenkvorrichtung 11 derart, daß der abgelenkte Strahl 12 an den dem Querschnitt des Objektes entsprechenden Stellen der Schicht auftrifft und dort das Material sintert bzw. verfestigt.

Die so verfestigte Schicht weist aufgrund der hohen Oberflächenspannung des Pulvers eine unregelmäßige bzw. rauhe Oberfläche auf. Die herausstehenden, verfestigten Pulverpartikel sind schwach an die darunterliegende, bereits verfestigte poröse Oberfläche gebunden.

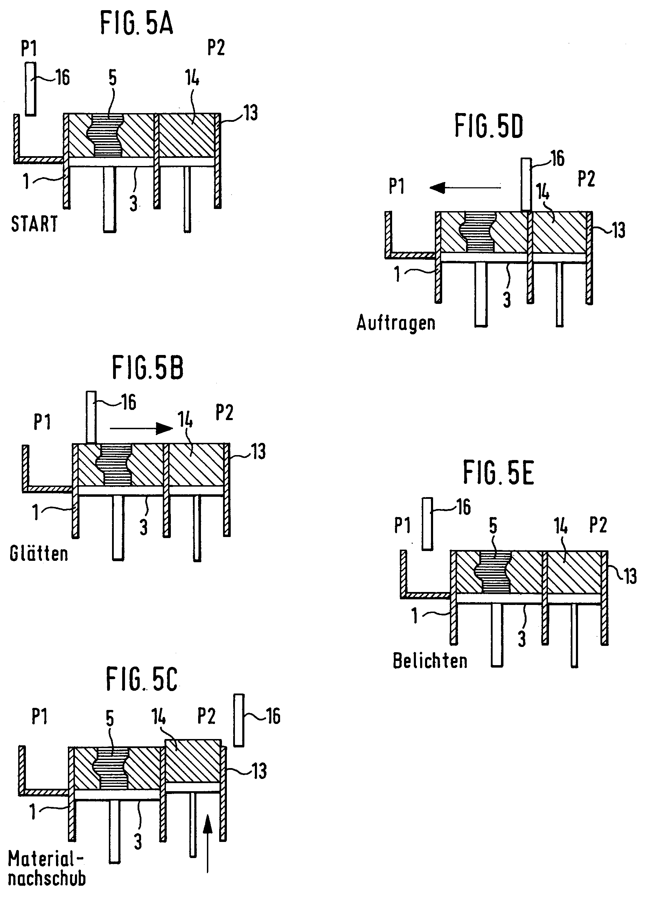

Dann werden für jede folgende Schicht die in den Figuren 4a bis 4e bzw. 5a-5e schematisch gezeigten Schritte durchgeführt.

Den Ausgangspunkt bildet jeweils eine belichtete Schicht (Fig. 4a). Der Beschichter befindet sich in seiner Position P1 auf der dem Vorratsbehälter gegenüberliegenden Seite (Fig. 5a).

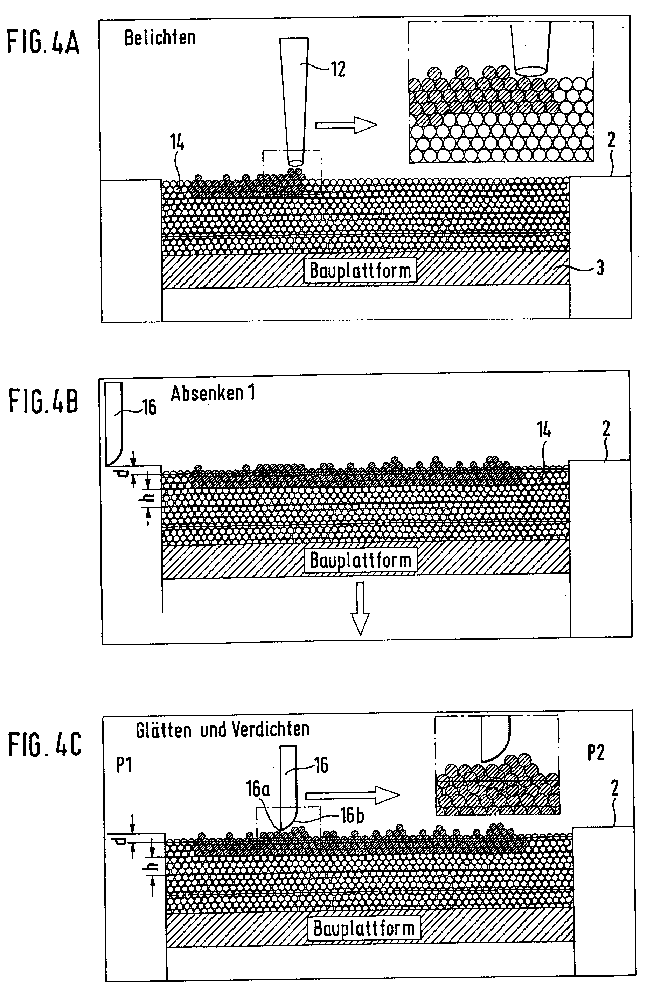

Der Träger 3 wird nach dem Belichten um ein bestimmtes Maß d abgesenkt, das zwischen 0 und der Schichtdicke h liegen kann (Fig. 4b).

Zur Vorbereitung eines neuen Schichtauftrages wird der Beschichter von seiner dem Vorratsbehälter 13 gegenüberliegenden Position P1 mit dem zweiten Randabschnitt voraus, d.h. mit der Seite, die die größere Fase bzw. die stärkere Abrundung aufweist, über die bereits belichtete Schicht wieder auf den Vorratsbehälter 13 zubewegt. Dabei wird die Oberfläche des verfestigten Pulvers geglättet und verdichtet (Fig. 4c, Fig. 5b). Der Beschichter löst dabei die herausstehenden Partikel nicht komplett ab, sondern verformt sie mechanisch so, daß eine ebene Oberfläche entsteht. Die überstehenden Partikel werden in die unter ihnen befindlichen Poren gepreßt, wodurch eine Verdichtung der Oberfläche stattfindet.

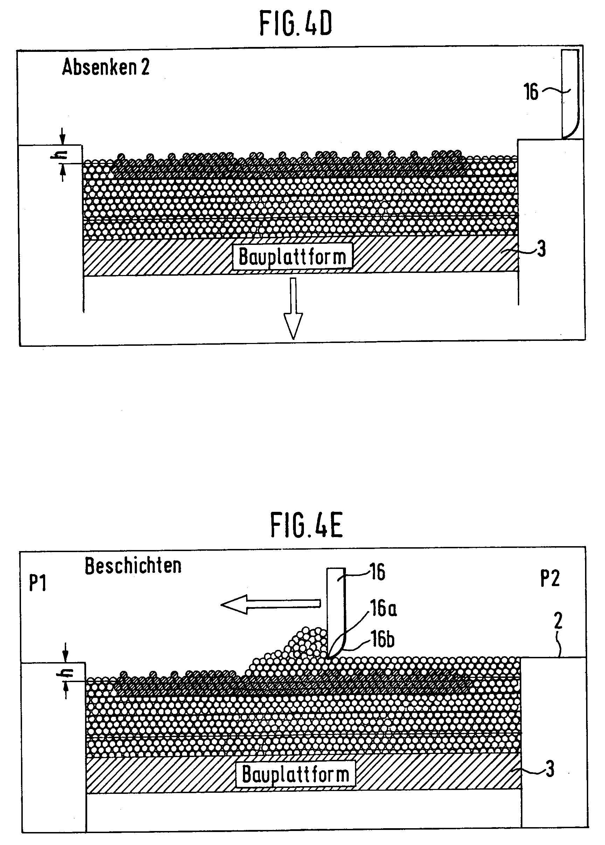

Wie in Fig. 4d gezeigt ist, wird sodann der Träger 3 auf die vorgesehene Schichtdicke h abgesenkt (Fig. 4d). Der verschiebbare Boden des Vorratsbehälters wird soweit nach oben gefahren, daß die Füllhöhe des Materials 14 wieder oberhalb der Oberkante des Vorratsbehälters liegt (Fig. 5c).

Anschließend wird eine neue Schicht des Materials 14 mit dem Beschichter 16 auf die zuvor gebildete Schicht aufgetragen, wobei der Beschichter 16 bei seiner Fahrt das Material von dem Vorratsbehälter 13 mit seinem ersten Randabschnitt 16a über die bereits verfestigte und geglättete Schicht schiebt (Fig. 4e). Danach wird die Schicht an den dem Objekt entsprechenden Stellen belichtet (Fig. 4a, Fig. 5e).

Die oben beschriebenen Schritte werden so oft wiederholt, bis das Objekt 5 fertiggestellt ist. Anschließend wird der Träger soweit aus dem Behälter herausgefahren, bis das Objekt abgenommen werden kann. Dieses wird dann von anhaftenden Pulverresten gereinigt.

## Patentansprüche

1. Vorrichtung zum Herstellen eines dreidimensionalen Objektes durch Lasersintern, bei welchem das Objekt (5) durch aufeinanderfolgendes Verfestigen von Schichten eines pulverförmigen, mittels Strahlung verfestigbaren Aufbaumaterials (14) an den dem jeweiligen Querschnitt des Objektes entsprechenden Stellen hergestellt wird, mit:
einem höhenverstellbaren Träger (3) zum Tragen des zu bildenden Objektes (5) mit einer im wesentlichen ebenen Oberseite (4),
einer Materialauftragevorrichtung (13, 16, 18) zum Auftragen von Schichten des Aufbaumaterials (14) auf den Träger (3) oder auf eine zuvor gebildete Schicht, wobei die Materialauftragevorrichtung einen parallel zur Oberseite (4) des Trägers (3) verschiebbaren Beschichter (16, 18) umfaßt, und
einer Verfestigungseinrichtung (8) zum Verfestigen einer Schicht des Aufbaumaterials (14) mittels Strahlung,
wobei der Beschichter (16, 18) eine erste und eine zweite Seitenfläche (20, 30; 21, 31) und eine zu der Oberseite (4) des Trägers (3) parallele und dieser zugewandte Grundfläche (22; 32) aufweist, dadurch gekennzeichnet, daß zwischen der ersten Seitenfläche (20; 30) und der Grundfläche (22; 32) ein erster Randabschnitt (16a; 18a) mit einer ersten Steigung (α₁) bezüglich der Grundfläche (22; 32) und zwischen der zweiten Seitenfläche (21; 31) und der Grundfläche (22; 32) ein zweiter Randabschnitt (16b; 18b) mit einer zweiten Steigung (α₂) ausgebildet ist, wobei die erste Steigung größer als die zweite Steigung ist.

2. Vorrichtung nach Anspruch 1, dadurch gekennzeichnet, daß
der erste und der zweite Randabschnitt (16a, 16b) jeweils eine ebene Fläche (23, 24) umfassen, die unter einem der ersten bzw. der zweiten Steigung entsprechenden Winkel (α₁, α₂) gegen die Ebene der Grundfläche (22) geneigt sind.

3. Vorrichtung nach Anspruch 2, dadurch gekennzeichnet, daß
der der ersten Steigung entsprechende Winkel (α₁) im Bereich zwischen etwa 60° und 70° liegt und der der zweiten Steigung entsprechende Winkel (α₂) zwischen etwa 20° bis 30° liegt.

4. Vorrichtung nach Anspruch 2 oder 3, dadurch gekennzeichnet, daß
der erste Winkel (α₁) etwa 60° beträgt und der zweite Winkel (α₂) etwa 30° beträgt.

5. Vorrichtung nach Anspruch 1, dadurch gekennzeichnet, daß
der erste und der zweite Randabschnitt jeweils eine gekrümmte Fläche (33, 34) umfassen, die mit einem der ersten bzw. der zweiten Steigung entsprechenden Krümmungsradius (R₁, R₂) zwischen der Grundfläche (32) und der jeweiligen Seitenfläche (30, 31) verlaufen, wobei der der ersten Steigung entsprechende erste Krümmungsradius (R₁) kleiner als der der zweiten Steigung entsprechende zweite Krümmungsradius (R₂) ist.

6. Vorrichtung nach Anspruch 5, dadurch gekennzeichnet, daß
der erste Krümmungsradius (R₁) zwischen etwa 0mm bis etwa 3mm liegt und der zweite Krümmungsradius (R₂) zwischen etwa 5mm bis etwa 10mm liegt.

7. Vorrichtung nach Anspruch 6, dadurch gekennzeichnet, daß
der erste Krümmungsradius (R₁) etwa 3mm und der zweite Krümmungsradius (R₂) etwa 10mm betragen.

8. Vorrichtung nach Anspruch 1, dadurch gekennzeichnet, daß
der erste Randabschnitt eine zwischen der Grundfläche (22, 32) und der ersten Seitenfläche (20, 30) verlaufende gerade Fläche (23) und der zweite Randabschnitt eine zwischen der Grundfläche (22, 32) und der zweiten Seitenfläche (21, 31) verlaufende gekrümmte Fläche (34) umfaßt.

9. Vorrichtung nach Anspruch 1, dadurch gekennzeichnet, daß
der erste Randabschnitt eine zwischen der Grundfläche (22, 32) und der ersten Seitenfläche (20, 30) verlaufende gekrümmte Fläche (33) und der zweite Randabschnitt eine zwischen der Grundfläche (22, 32) und der zweiten Seitenfläche (21, 31) verlaufende gerade Fläche (24) aufweist.

10. Vorrichtung nach einem der Ansprüche 1 bis 9, dadurch gekennzeichnet, daß
ein Vorratsbehälter (13) für das Aufbaumaterial (14) oberhalb des Trägers (3) vorgesehen ist und der erste Randabschnitt (16a, 18a) auf der dem Vorratsbehälter (13) abgewandten Seite des Beschichters (16, 18) liegt.

11. Vorrichtung nach Anspruch 10, dadurch gekennzeichnet, daß
der zweite Randabschnitt (16b, 18b) auf der dem Vorratsbehälter (13) zugewandten Seite des Beschichters liegt.

12. Vorrichtung nach Anspruch 10 oder 11, dadurch gekennzeichnet, daß
eine Steuerung (50, 17) zum Bewegen des Beschichters (16, 18) parallel zu der Oberseite (4) des Trägers mit dem ersten Randabschnitt (16a, 18a) voraus von einer Position (P2) über dem Vorratsbehälter (13) zum Auftragen von Material auf den Träger (3) bzw. eine zuvor gebildete Schicht in eine dem Vorratsbehälter (13) gegenüberliegende Position (P1) vorgesehen ist.

13. Vorrichtung nach Anspruch 12, dadurch gekennzeichnet, daß
die Steuerung (50, 17) so ausgebildet ist, daß der Beschichter (16, 18) nach dem Verfestigen einer Schicht von seiner dem Vorratsbehälter gegenüberliegenden Position (P1) mit dem zweiten Randabschnitt (16b, 18b) voraus über die bereits verfestigte Schicht in die Position (P2) bewegbar ist.

14. Vorrichtung nach einem der Ansprüche 1 bis 13, dadurch gekennzeichnet, daß
der Beschichter (16, 18) aus einem starren Material, insbesondere aus Metall gebildet ist.

15. Vorrichtung nach einem der Ansprüche 1 bis 14, dadurch gekennzeichnet, daß
die erste und die zweite Seitenfläche (20, 30; 21, 31) im wesentlichen senkrecht zur Grundfläche (22, 32) angeordnet sind.

16. Verfahren zum Herstellen eines dreidimensionalen Objektes mittels Lasersintern mit einer Vorrichtung nach einem der Ansprüche 1 bis 15, dadurch gekennzeichnet, daß für jede auf die erste Schicht folgende Schicht die folgenden Schritte ausgeführt werden:
a) Glätten und Verdichten einer zuvor verfestigten Schicht durch Bewegen des Beschichters (16, 18) in einer durch den zweiten Randabschnitt (16b, 18b) definierten Richtung parallel zu der Oberseite (4) des Trägers (3) über die Schicht;
b) Auftragen des Aufbaumaterials (14) auf die zuvor verfestigte Schicht, wobei der Beschichter (16, 18) in der durch den ersten Randabschnitt (16a, 18a) definierten Richtung parallel zu der Oberseite (4) des Trägers bewegt wird; und
c) Verfestigen der aufgetragenen Schicht des Aufbaumaterials (14) an den dem jeweiligen Objektquerschnitt entsprechenden Stellen durch Bestrahlung.

17. Verfahren nach Anspruch 16, gekennzeichnet durch den Schritt des Absenkens des Träger (3) vor dem Glätten und Verdichten um eine Höhe (d), welche zwischen 0 und der gewünschten Schichtdicke (h) liegt.

18. Verfahren nach Anspruch 16 oder 17, gekennzeichnet durch einen Schritt des Absenkens des Trägers (3) vor dem Auftragen einer Schicht um eine der gewünschten Schichtdicke entsprechende Höhe (h).

19. Verfahren zum Herstellen eines dreidimensionalen Objektes, bei dem das Objekt (5) durch aufeinanderfolgendes Verfestigen von Schichten eines pulverförmigen, mittels Strahlung verfestigbaren Aufbaumaterials (14) an den dem jeweiligen Querschnitt des Objektes entsprechenden Stellen gebildet wird,
dadurch gekennzeichnet, daß für jede auf die erste Schicht folgende Schicht die folgenden Schritte ausgeführt werden:
a) Glätten und Verdichten der zuvor verfestigten Schicht;
b) Auftragen des Aufbaumaterials (14) auf eine zuvor verfestigte Schicht des Objektes (5); und
c) Verfestigen der aufgetragenen Schicht des Aufbaumaterials (14) an den dem jeweiligen Objektquerschnitt entsprechenden Stellen.

## Claims

1. Apparatus for producing a three-dimensional object by laser sintering, in which the object (5) is produced by successive solidification of layers of a powdered, radiation-solidifiable build-up material (14) at the places corresponding to the particular cross-section of the object, having:
a height-adjustable carrier (3) for carrying the object (5) to be formed, having a substantially plane upper surface (4),
a material-applying device (13, 16, 18) for applying layers of the build-up material (14) onto the carrier (3) or onto a previously formed layer, the material-applying device comprising a layer-forming means (16, 18) displaceable parallel to the upper surface (4) of the carrier (3), and
a solidifying device (8) for solidifying a layer of the build-up material (14) by means of radiation,
the layer-forming means (16, 18) having a first and a second side face (20, 30; 21, 31) and a bottom face (22; 32) parallel to and facing the upper surface (4) of the carrier (3), characterised in that a first edge portion (16a; 18a) having a first incline (α₁) relative to the bottom face (22; 32) is formed between the first side face (20; 30) and the bottom face (22; 32) and a second edge portion (16b; 18b) having a second incline (α₂) is formed between the second side face (21; 31) and the bottom face (22; 32), the first incline being greater than the second incline.

2. Apparatus according to Claim 1, characterised in that the first and the second edge portion (16a, 16b) each comprise a plane surface (23, 24) inclined at an angle (α₁, α₂), corresponding respectively to the first and second incline, with respect to the plane of the bottom face (22).

3. Apparatus according to Claim 2, characterised in that the angle (a₁) corresponding to the first incline is in the range between about 60° and 70° and the angle (α₂) corresponding to the second incline is between about 20° to 30°.

4. Apparatus according to Claim 2 or 3, characterised in that the first angle (α₁) is about 60° and the second angle (α₂) is about 30°.

5. Apparatus according to Claim 1, characterised in that the first and the second edge portion each comprise a curved surface (33, 34) running, with a radius of curvature (R₁, R₂) corresponding respectively to the first and second incline, between the bottom face (32) and the respective side face (30, 31), the first radius of curvature (R₁) corresponding to the first incline being smaller than the second radius of curvature (R₂) corresponding to the second incline.

6. Apparatus according to Claim 5, characterised in that the first radius of curvature (R₁) is between about 0 mm to about 3 mm and the second radius of curvature (R₂) is between about 5 mm to about 10 mm.

7. Apparatus according to Claim 6, characterised in that the first radius of curvature (R₁) is about 3 mm and the second radius of curvature (R₂) is about 10 mm.

8. Apparatus according to Claim 1, characterised in that the first edge portion comprises a flat surface (23) running between the bottom face (22, 32) and the first side face (20, 30) and the second edge portion comprises a curved surface (34) running between the bottom face (22, 32) and the second side face (21, 31).

9. Apparatus according to Claim 1, characterised in that the first edge portion has a curved surface (33) running between the bottom face (22, 32) and the first side face (20, 30) and the second edge portion has a flat surface (24) running between the bottom face (22, 32) and the second side face (21, 31).

10. Apparatus according to one of Claims 1 to 9, characterised in that a storage container (13) for the build-up material (14) is provided above the carrier (3) and the first edge portion (16a, 18a) lies on the side of the layer-forming means (16, 18) which faces away from the storage container (13).

11. Apparatus according to Claim 10, characterised in that the second edge portion (16b, 18b) lies on the side of the layer-forming means which faces the storage container (13).

12. Apparatus according to Claim 10 or 11, characterised in that a control means (50, 17) is provided for moving the layer-forming means (16, 18) parallel to the upper surface (4) of the carrier, with the first edge portion (16a, 18a) in front, from a position (P2) above the storage container (13) for applying material onto the carrier (13) or a previously formed layer into a position (P1) opposite the storage container (13).

13. Apparatus according to Claim 12, characterised in that the control means (50, 17) is designed so that, following the solidification of a layer, the layer-forming means (16, 18) is movable from its position (P1) opposite the storage container, with the second edge portion (16b, 18b) in front, over the already solidified layer into the position (P2).

14. Apparatus according to one of Claims 1 to 13, characterised in that the layer-forming means (16, 18) is formed from a rigid material, in particular from metal.

15. Apparatus according to one of Claims 1 to 14, characterised in that the first and the second side face (20, 30; 21, 31) are arranged substantially perpendicularly to the bottom face (22, 32).

16. Method for producing a three-dimensional object by means of laser sintering using an apparatus according to one of Claims 1 to 15, characterised in that, for each layer following the first layer, the following steps are carried out:
a) smoothing and compacting of a previously solidified layer by moving the layer-forming means (16, 18) over the layer in a direction, defined by the second edge portion (16b, 18b), parallel to the upper surface (4) of the carrier (3);
b) application of the build-up material (14) onto the previously solidified layer, the layer-forming means (16, 18) being moved in the direction, defined by the first edge portion (16a, 18a), parallel to the upper surface (4) of the carrier; and
c) solidification of the applied layer of the build-up material (14) at the places corresponding to the particular object cross-section by irradiation.

17. Method according to Claim 16, characterised by the step involving lowering the carrier (3), before the smoothing and compacting, by a height (d) which is between 0 and the desired layer thickness (h).

18. Method according to Claim 16 or 17, characterised by a step involving lowering the carrier (3), before the application of a layer, by a height (h) corresponding to the desired layer thickness.

19. Method for producing a three-dimensional object, in which the object (5) is formed by successive solidification of layers of a powdered, radiation-solidifiable build-up material (14) at the places corresponding to the particular cross-section of the object, characterised in that, for each layer following the first layer, the following steps are carried out:
a) smoothing and compacting of the previously solidified layer;
b) application of the build-up material (14) onto a previously Solidified layer of the object (5); and
c) solidification of the applied layer of the build-up material (14) at the places corresponding to the particular object cross-section.

## Revendications

1. Dispositif pour la fabrication par frittage au laser d'un objet en trois dimensions, la fabrication de cet objet (5) étant exécutée en solidifiant successivement des couches d'un matériau (14) pulvérulent, pouvant être solidifié par irradiation, en des points qui correspondent à la section transversale respective de l'objet, ce dispositif comportant :
un support (3) réglable en hauteur, servant à supporter l'objet (5) formé, et présentant une surface (4) sensiblement plane, un dispositif d'application du matériau (13, 16, 18) servant à appliquer des couches du matériau (14) sur le support (3) ou sur une couche formée précédemment, ce dispositif d'application du matériau comprenant un applicateur (16, 18) coulissable parallèlement à la surface (4) du support (3), et
un dispositif de solidification (8) servant à solidifier une couche du matériau (14) au moyen d'un rayonnement,
tandis que l'applicateur (16, 18) présente une première et une deuxième faces latérales (20, 30 ; 21, 31) et une face de base (22 ; 32) parallèle à la surface (4) du support (3) et orientée vers cette dernière,
caractérisé en ce qu'entre la première face latérale (20 ; 30) et la face de base (22 ; 32) est conformée une première section marginale (16a ; 18a) présentant une première inclinaison (α₁) par rapport à la face de base (22 ; 32), et entre la deuxième face latérale (21 ; 31) et la face de base (22 ; 32) est conformée une deuxième section marginale (16b ; 18b) présentant une deuxième inclinaison (α₂), la première inclinaison étant plus forte que la deuxième.

2. Dispositif selon la revendication 1, caractérisé en ce que la première et la deuxième sections marginales (16a, 16b) présentent chacune une face plane (23, 24), chacune de ces faces planes (23, 24) étant inclinée par rapport à la face de base (22) en formant un angle (α₁, α₂) correspondant à la première et à la deuxième inclinaisons respectivement.

3. Dispositif selon la revendication 2, caractérisé en ce que l'angle (α₁) correspondant à la première inclinaison se situe approximativement entre 60 et 70°, et l'angle (α₂) correspondant à la deuxième inclinaison se situe approximativement entre 20 et 30°.

4. Dispositif selon la revendication 2 ou 3, caractérisé en ce que le premier angle (α₁) est d'environ 60° et le deuxième angle (α₂) d'environ 30°.

5. Dispositif selon la revendication 1, caractérisé en ce que la première et la deuxième sections marginales respectivement, présentent une face courbe (33, 34), ces faces s'étendant entre la face de base (32) et la face latérale respective (30, 31) sous un rayon de courbure (R₁, R₂) correspondant respectivement à la première et à la deuxième inclinaisons, le premier rayon de courbure (R₁) correspondant à la première inclinaison étant inférieur au deuxième rayon de courbure (R₂) correspondant à la deuxième inclinaison.

6. Dispositif selon la revendication 5, caractérisé en ce que le premier rayon de courbure (R₁) se situe entre environ 0 et environ 3 mm et que le deuxième rayon de courbure (R₂) se situe entre environ 5 et environ 10 mm.

7. Dispositif selon la revendication 6, caractérisé en ce que le premier rayon de courbure (R₁) est d'environ 3 mm et le deuxième rayon de courbure (R₂) d'environ 10 mm.

8. Dispositif selon la revendication 1, caractérisé en ce que la première section marginale présente une face (23) s'étendant de manière rectiligne entre la face de base (22, 32) et la première face latérale (20, 30) et que la deuxième section marginale présente une face courbe (34) s'étendant entre la face de base (22, 32) et la deuxième face latérale (21, 31).

9. Dispositif selon la revendication 1, caractérisé en ce que la première section marginale présente une face courbe (33) s'étendant entre la face de base (22, 32) et la première face latérale (20, 30) et que la deuxième section marginale présente une face rectiligne (24) s'étendant entre la face de base (22, 32) et la deuxième face latérale (21, 31).

10. Dispositif selon l'une des revendications 1 à 9, caractérisé par la présence d'un réservoir (13) pour le matériau (14) au-dessus du support (3), et en ce que la première section marginale (16a, 18a) se situe sur le côté de l'applicateur (16, 18) opposé au réservoir (13).

11. Dispositif selon la revendication 10, caractérisé en ce que la deuxième section marginale (16b, 18b) se situe sur le côté de l'applicateur orienté vers le réservoir (13).

12. Dispositif selon la revendication 10 ou 11, caractérisé par la présence d'une commande (50, 17) servant à déplacer l'applicateur (16, 18) parallèlement à la face supérieure (4) du support, par sa première section marginale (16a, 18a), en direction avant à partir d'une position (P2) située au-dessus du réservoir (13), pour l'application de matériau sur le support (3) ou sur une couche formée précédemment, jusqu'à une position (P1) située en face du réservoir (13).

13. Dispositif selon la revendication 12, caractérisé en ce que la commande (50, 17) est réalisée de telle manière que l'applicateur (16, 18), après la solidification d'une couche, est mobile, par sa deuxième section marginale (16b, 18b), entre sa position (P1) située en face du réservoir et la position (P2) située au-dessus de la couche déjà solidifiée.

14. Dispositif selon l'une des revendications 1 à 13, caractérisé en ce que l'applicateur (16, 18) est réalisé en une matière rigide, en particulier en métal.

15. Dispositif selon l'une des revendications 1 à 14, caractérisé en ce que la première et la deuxième faces latérales (20, 30 ; 21, 31) sont disposées sensiblement perpendiculairement à la face de base (22, 32).

16. Procédé de fabrication d'un objet en trois dimensions par frittage au laser au moyen d'un dispositif conforme à l'une des revendications 1 à 15, caractérisé en ce que pour chaque couche consécutive à la première sont exécutées les opérations suivantes :
a) lissage et compactage d'une couche, précédemment solidifiée, en faisant coulisser l'applicateur (16, 18) sur ladite couche, en une direction définie par la deuxième section marginale (16b, 18b), parallèlement à la surface supérieure (4) du support (3) ;
b) application du matériau (14) sur la couche précédemment solidifiée, l'applicateur (16, 18) étant déplacé dans la direction définie par la première section marginale (16a, 18a), parallèlement à la surface supérieure (4) du support ; et
c) solidification, par rayonnement laser, de la couche appliquée du matériau (14) aux points correspondant à la section transversale respective de l'objet.

17. Procédé selon la revendication 16, caractérisé par l'opération, exécutée avant le lissage et le compactage, d'abaissement du support (3) d'une hauteur (d) qui se situe entre O et l'épaisseur (h) souhaitée pour la couche.

18. Procédé selon la revendication 16 ou 17, caractérisé par l'opération exécutée avant l'application d'une couche, d'abaissement du support (3) d'une hauteur qui correspond à une hauteur (h) souhaitée pour la couche.

19. Procédé de fabrication d'un objet en trois dimensions, au cours duquel l'objet (5) est formé par la solidification de couches successives d'un matériau (14) Pulvérulent, solidifiable, par rayonnement appliqué aux points correspondant à la section transversale respective dudit objet,
caractérisé en ce que pour chaque couche consécutive à la première sont exécutées les opérations suivantes :
a) lissage et compactage d'une couche précédemment solidifiée ;
b) application du matériau (14) sur l'une des couches précédemment solidifiées de l'objet (5) ; et
c) solidification de la couche appliquée du matériau (14) aux points correspondant à la section transversale respective de l'objet.
